# FASCICULE DE BREVET EUROPEEN

(11) **EP 3 619 439 B1**
(45) Date de publication et mention de la délivrance du brevet: **02.06.2021**
(21) Numéro de dépôt: 18722123.9
(22) Date de dépôt: 06.04.2018
(51) Int. Cl.: F16C 1/22, B60N 2/02

(54) **DISPOSITIF DE RÉGLAGE D'UN CABLE D'ACTIONNEMENT DE SIÈGE DE VÉHICULE AUTOMOBILE**
VORRICHTUNG ZUM EINSTELLEN EINES KRAFTFAHRZEUGSITZBETÄTIGUNGSKABELS
DEVICE FOR ADJUSTING A MOTOR VEHICLE SEAT ACTUATING CABLE

(30) Priorité: 03.05.2017 FR 1753882
(43) Date de publication de la demande: 11.03.2020
(73) Titulaire: PSA Automobiles SA, 78300 Poissy (FR)
(72) Inventeur: CARRIER, Sebastien, 78310 Maurepas (FR); PINTO TEIXEIRA, Frederic, 91160 Ballainvilliers (FR); DORIDOT, Jean Marie, 94230 Cachan (FR)
(86) Numéro de dépôt international: PCT/FR2018/050867
(87) Numéro de publication internationale: WO 2018/202970

(56) Documents cités:
- FR-A1- 2 496 197
- FR-A1- 2 862 725

## Description

L'invention concerne, de façon générale, le réglage d'un câble, en particulier d'un câble de siège de véhicule automobile.

L'invention porte plus particulièrement sur un dispositif de réglage du jeu d'un câble d'actionnement d'un mécanisme de siège automobile.

Dans l'état de la technique, le document FR2862725 décrit un dispositif de blocage de deux éléments l'un par rapport à l'autre, ce dispositif comprenant une tige portée par l'un des éléments et traversant avec jeu des orifices formés dans deux pattes portées par l'autre élément, un ressort de rappel sollicitant les deux pattes à l'opposé l'une de l'autre dans une position de blocage de la tige, et des moyens de commande pour rapprocher les deux pattes l'une de l'autre dans une position de déblocage de la tige. Ce document montre un dispositif de réglage comme décrit dans le préambule de la revendication 1, il montre également une partie du procédé de réglage de la revendication 7.

De manière connue, un véhicule automobile comprend des sièges dont certaines parties sont mobiles. C'est notamment le cas dans un véhicule à trois portes dans lequel le dossier des sièges avant peut être incliné afin de faciliter l'accès aux sièges arrière. Dans certains véhicules les sièges arrière peuvent être rabattus afin d'augmenter les dimensions du coffre. Dans d'autres véhicules enfin, le siège passager avant peut être tourné afin de passer d'une position dans laquelle le siège est face à la route à une position dans laquelle le siège est dos à la route afin de faire face aux sièges arrière.

De tels mouvements du siège sont bloqués en usage normal pour des raisons de sécurité et une manette montée sur le siège permet de le débloquer lorsqu'un utilisateur désire bouger le siège.

Une telle manette est reliée à un système de blocage du mouvement du siège par un câble. Lorsque l'utilisateur tire sur la manette, le câble est tendu et débloque le système de blocage afin de permettre le mouvement du siège.

Afin que le déblocage du mouvement soit rapide, le câble doit être tendu afin qu'il puisse agir sur le système de blocage dès que l'utilisateur commence à tirer sur la manette.

Cependant, lorsque le câble reste tendu à l'état de repos de la manette, la tension du câble crée des contraintes dans le mécanisme du siège, ce qui peut le détériorer. De plus, si le câble est trop tendu, il peut débloquer le système de blocage de manière accidentelle, ce qui présente un inconvénient majeur.

Aussi, il est connu de laisser un jeu dans le câble, désigné « course morte », afin que le câble ne soit pas tendu à l'état de repos. Lorsque l'utilisateur tire sur la manette, le câble se tend tout d'abord jusqu'à rattraper la course morte, autrement dit, l'utilisateur tire sur la manette sans provoquer le déblocage. Puis, lorsque l'utilisateur continue de tirer, le câble agit sur le système de blocage.

Il est donc nécessaire que cette course morte ne soit pas trop importante pour que l'utilisateur ne ressente pas un jeu trop important dans la manette avant qu'elle n'agisse.

On connait par le document DE10055425 un système d'ajustement automatique du câble d'actionnement permettant de régler de manière automatique le jeu du câble. Cependant, un tel système est coûteux et complexe à monter dans un siège de véhicule automobile.

L'invention vise donc à résoudre ces inconvénients en proposant un dispositif de réglage du câble d'actionnement d'un mécanisme d'un siège de véhicule automobile.

Pour parvenir à ce résultat, la présente invention concerne un dispositif de réglage d'un câble d'actionnement d'un mécanisme de siège pour véhicule, notamment automobile, ledit câble étant monté coulissant dans une gaine, ledit dispositif de réglage comprenant des moyens de fixation adaptés pour fixer ladite gaine au dispositif de réglage et des moyens de montage adaptés pour fixer le câble au dispositif de réglage, les moyens de montage étant mobile par rapport aux moyens de fixation afin de régler un jeu fonctionnel du câble définit par la distance entre les moyens de fixation et les moyens de montage, le dispositif de réglage comprenant en outre des moyens d'asservissement du réglage du jeu fonctionnel du câble, ledit câble n'étant pas tendu en position de repos, une position d'actionnement dans lequel le câble W est tiré afin de commander le déblocage du mécanisme de blocage du siège, et une position dans laquelle ledit câble W est tendu afin de rattraper le jeu de fonctionnement avant d'être tiré, et en ce que les moyens de montage (30) comprenant une partie fixe (31) et une partie mobile (32) montée coulissante par rapport à ladite partie fixe (31), ladite partie mobile (32) est adaptée pour fixer ledit câble (W) au dispositif de réglage (100), conformément à l'intitulé de la revendication 1.

Grâce au dispositif de réglage selon l'invention, le jeu d'un câble d'actionnement peut aisément être réglé grâce à l'asservissement du réglage. Ainsi, le jeu, également désigné course morte, peut être ajusté de manière précise afin que le câble ne soit ni trop tendu, afin de préserver les éléments du siège et prévenir un déblocage accidentel, ni pas assez, afin que l'utilisateur ne ressente pas une course morte trop importante au niveau de la manette d'actionnement.

Avantageusement, les moyens de montage comprennent un ressort de rappel de la partie mobile adapté pour déplacer la partie mobile dans une position prédéterminée.

Avantageusement, les moyens d'asservissement comprennent au moins un contact électrique fixe et au moins un contact électrique mobile formant un contacteur électrique, ledit contact fixe et ledit contact mobile étant adaptés pour être reliés électriquement entre eux lorsque la distance entre les moyens de fixations et les moyens de montage atteint une valeur prédéterminée, définissant un état fermé dudit contacteur.

Avantageusement, le dispositif comprend au moins deux contacts fixes et deux contacts mobiles, lesdits contacts mobiles étant reliés électriquement entre eux et chacun desdits contacts fixes étant adaptés pour être reliés électriquement à un des contacts mobiles à l'état fermé du contacteur de manière à ce que les contacts fixes soient reliés électriquement entre eux.

L'invention vise également un siège comprenant un mécanisme de blocage dudit siège, une manette de commande dudit mécanisme, un câble reliant ladite manette de commande au mécanisme de blocage, une gaine de protection dudit câble et un dispositif tel que décrit précédemment, de réglage du câble.

L'invention concerne en outre un véhicule automobile comprenant au moins un siège tel que décrit précédemment.

L'invention concerne également un procédé de réglage, à l'aide d'un dispositif, tel que décrit précédemment, de réglage d'un câble monté coulissant dans une gaine, le procédé comprenant une étape de réglage du jeu dudit câble, une étape de détection de la fermeture du contacteur électrique, et une étape d'arrêt automatique du réglage du jeu lorsque la fermeture du contacteur est détectée.

Avantageusement, l'étape de réglage comprend une sous-étape de réglage de la longueur de la gaine à l'aide d'un outil.

Avantageusement, l'étape d'arrêt automatique comprend une sous-étape d'arrêt dudit outil de réglage de la gaine.

D'autres caractéristiques et avantages de l'invention apparaîtront à la lecture de la description détaillée des modes de réalisation de l'invention, donnés à titre d'exemple uniquement, et en référence aux dessins qui montrent :
- la figure 1, un schéma d'un siège monté dans un véhicule automobile,
- la figure 2, un schéma d'un câble d'actionnement d'un mécanisme du siège de la figure 1,
- la figure 3, une vue partielle du siège de la figure 1 sur lequel est monté un câble,
- les figures 4 et 5, différentes vues d'un schéma d'une forme de réalisation du dispositif de réglage selon l'invention du câble, et
- les figures 6 et 7, différentes étapes du réglage à l'aide du dispositif des figures 4 et 5.

Dans ce qui va suivre, les modes de réalisation décrits s'attachent plus particulièrement à une mise en œuvre du dispositif de réglage selon l'invention au sein d'un véhicule automobile. Cependant, toute mise en œuvre dans un contexte différent, en particulier dans tout type de véhicule, est également visée par la présente invention, notamment pour un véhicule aéronautique, maritime et/ou ferroviaire.

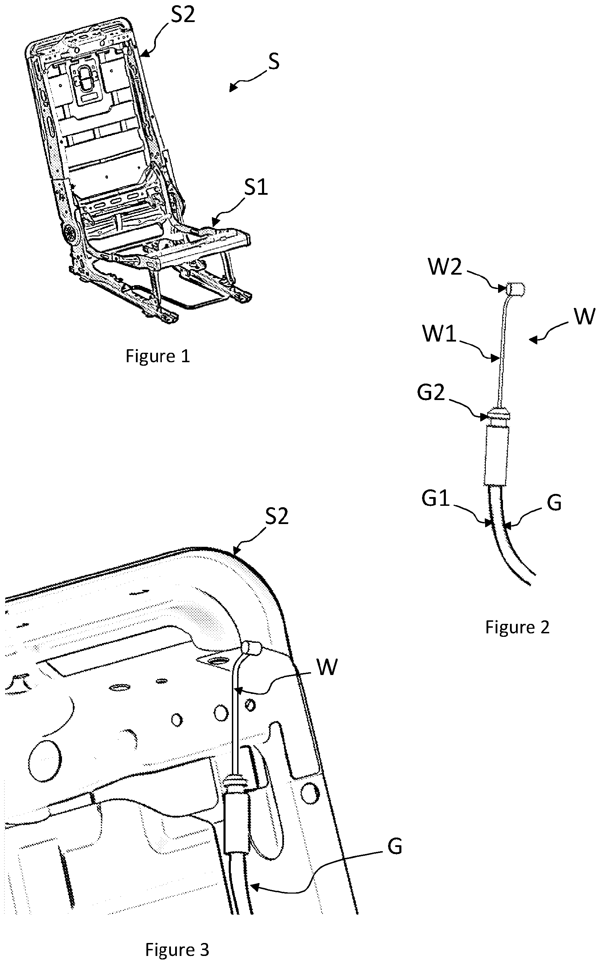

La figure 1 représente un siège S monté à l'intérieur d'un véhicule (non représenté). Le siège S peut notamment être monté à l'avant ou à l'arrière d'un véhicule automobile et est alors respectivement un siège avant ou un siège arrière. Un tel siège S comprend une assise S1, sur laquelle un opérateur peut s'assoir, et un dossier S2.

Le siège S ou au moins une partie du siège S, notamment le dossier S2, est adapté pour être monté mobile par rapport au véhicule. Par exemple, dans un véhicule automobile à trois portes, le dossier S2 des sièges S avant peut être incliné afin de faciliter l'accès aux sièges arrière. Dans certains véhicules automobiles les sièges arrière peuvent être rabattus afin d'augmenter les dimensions du coffre. Dans d'autres véhicules automobiles enfin, le siège passager avant peut tourner afin de passer d'une position dans laquelle le siège est face à la route à une position dans laquelle le siège est dos à la route afin de faire face aux sièges arrière.

Lorsque le véhicule automobile se déplace sur une voie de circulation, le mouvement du siège S est bloqué. Dans ce but, le siège S comprend en outre un mécanisme de blocage (non représenté) adapté pour verrouiller la position du siège S, une manette (non représentée) de commande dudit mécanisme de blocage et un câble W reliant ladite manette de commande au mécanisme de blocage.

Une forme de réalisation d'un câble W de commande est représentée sur la figure 2. Le câble W comprend un corps W1 s'étendant longitudinalement, une extrémité (non représentée) de liaison au mécanisme de blocage et une extrémité de commande reliée à la manette de commande.

Le câble W comprend au niveau de son extrémité de commande une tête W2 adaptée pour être fixée à la manette de commande. Une telle tête W2 présente un diamètre supérieur au diamètre du corps W1 du câble W afin de permettre le blocage longitudinal de la tête.

Le câble W est monté coulissant dans une gaine G de protection. La gaine G permet également de guider le déplacement du câble W entre la manette de commande et le mécanisme de blocage.

La gaine G comprend un corps G1 s'étendant longitudinalement, une extrémité proximale de l'extrémité de commande du câble W et une extrémité distale. La gaine G comprend un arrêt de gaine G2 au niveau de son extrémité proximale. Cet arrêt de gaine G2 présente un diamètre supérieur au diamètre du corps G1 de la gaine G. L'arrêt de gaine G2 est adapté pour être monté de manière fixe par rapport au siège S. Ainsi, lors de l'actionnement de la manette de commande, la tête W2 du câble W s'éloigne de l'arrêt de gaine G2, ce qui entraîne le coulissement du câble W dans la gaine G. La gaine G comprend en outre des moyens de réglage (non représentés) adaptés pour modifier la longueur du corps G1 de la gaine G.

La portion de câble W située entre l'arrêt de gaine G2 et la tête de câble W2 est appelée le dépassant de câble. Lors du réglage de la longueur de la gaine G, la longueur du dépassant de câble est modifiée. Un tel dépassant de câble définit le déplacement libre de la tête de câble W2, autrement dit le déplacement n'entraînant pas le déverrouillage du mécanisme de blocage du siège S, également désigné « jeu » ou « course morte » du câble.

Les moyens de réglage peuvent, de manière connue, se présenter sous la forme d'une tige filetée et d'un écrou monté coulissant le long de la tige filetée afin d'augmenter ou de diminuer la longueur de la gaine G. Ces moyens de réglage permettent ainsi de régler le jeu de fonctionnement du câble comme cela sera décrit par la suite.

Pour régler la longueur de la gaine G, un outil spécifique permet d'entraîner l'écrou en rotation autour de la tige filetée afin de déplacer se dernier selon l'axe de la gaine G. Avantageusement, un tel outil comprend un moteur adapté pour entraîner la rotation de l'écrou de manière automatique.

La suite de la description s'attache plus particulièrement au cas où le dossier d'un siège S est mobile afin de permettre l'accès aux places arrière. Dans ce cas, l'extrémité de commande du câble W peut être placée sur le dossier S2 comme illustré à la figure 3.

Lorsqu'un opérateur souhaite faire pivoter le dossier S2 du siège S, il actionne la manette de commande, ce qui entraîne l'extrémité de commande du câble W en translation. Le câble W coulisse alors dans la gaine G, ce qui entraîne le déplacement de l'extrémité de liaison qui commande alors le déverrouillage du mécanisme de blocage.

La manette bascule ainsi entre une position de repos dans laquelle le câble W n'est pas tendu et une position d'actionnement dans laquelle le câble W est tiré afin de commander le déblocage du mécanisme de blocage du siège S.

Lors du basculement de la manette de la position de repos à la position de basculement, le câble W est tout d'abord tendu afin de rattraper le jeu de fonctionnement avant d'être tiré.

Le dispositif de réglage 100 selon l'invention permet de régler le jeu de fonctionnement du câble W afin que ce dernier ne soit pas tendu en position de repos de la manette tout en permettant un basculement rapide en position d'actionnement.

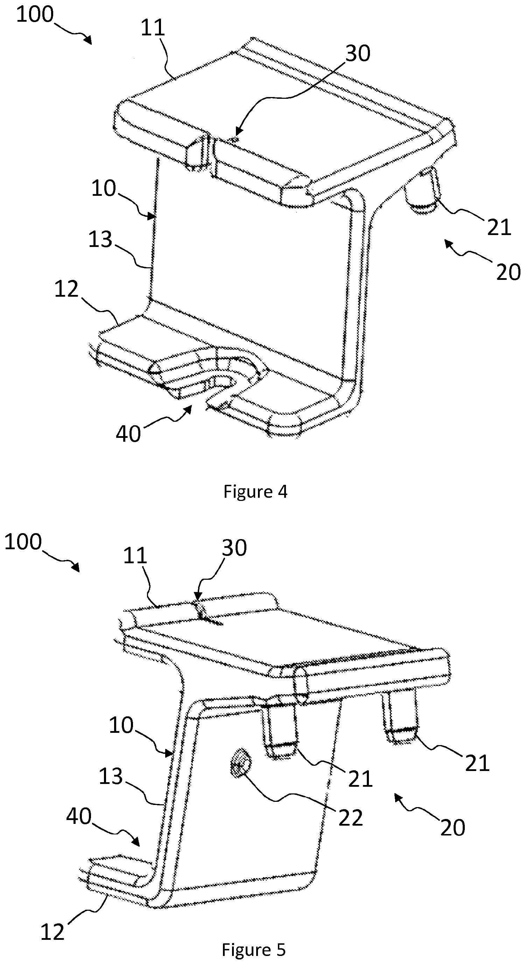

En référence aux figures 4 et 5, le dispositif de réglage 100 comprend un corps principal 10 sur lequel sont montés le câble W et la gaine G, et une interface 20 de montage du dispositif 100 sur le siège S d'un véhicule.

Dans cet exemple, l'interface de montage 20 comprend trois plots 21, 22 adaptés pour être insérés dans des orifices du siège. Ces orifices sont adaptés pour permettre le montage de l'extrémité de commande du câble W. Chaque plot 21, 22 s'étend selon un axe. Avantageusement, deux plots 21, 22 s'étendent selon des axes sensiblement orthogonaux entre eux afin de verrouiller la position du dispositif 100 sur le siège S.

Le corps principal 10 présente une forme sensiblement en U comprenant une portion supérieure 11, une portion inférieure 12 et un fond 13 reliant la portion supérieure 11 et la portion inférieure 12. Lorsque le dispositif 100 est monté sur un siège S, le fond 13 s'étend sensiblement verticalement et chacune des portions supérieure 11 et inférieure 12 s'étend sensiblement horizontalement. Les portions supérieure 11 et inférieure 12 définissent chacune un plan horizontal sensiblement parallèle entre eux.

Le dispositif 100 comprend, au niveau de la portion supérieure 11 du corps 10, des moyens 30 de montage de l'extrémité de commande du câble W sur lesquels est fixé le câble W. Le dispositif 100 comprend, au niveau de la portion inférieure 12 du corps 10, des moyens 40 de blocage de l'extrémité proximale de la gaine G.

Les moyens de blocage 40 de la gaine G se présentent sous la forme d'une rainure dans la portion inférieure 12 du corps 10. Ainsi, l'arrêt de gaine G2 est inséré dans la rainure de manière à verrouiller sa position et ainsi empêcher son coulissement selon l'axe de la gaine G.

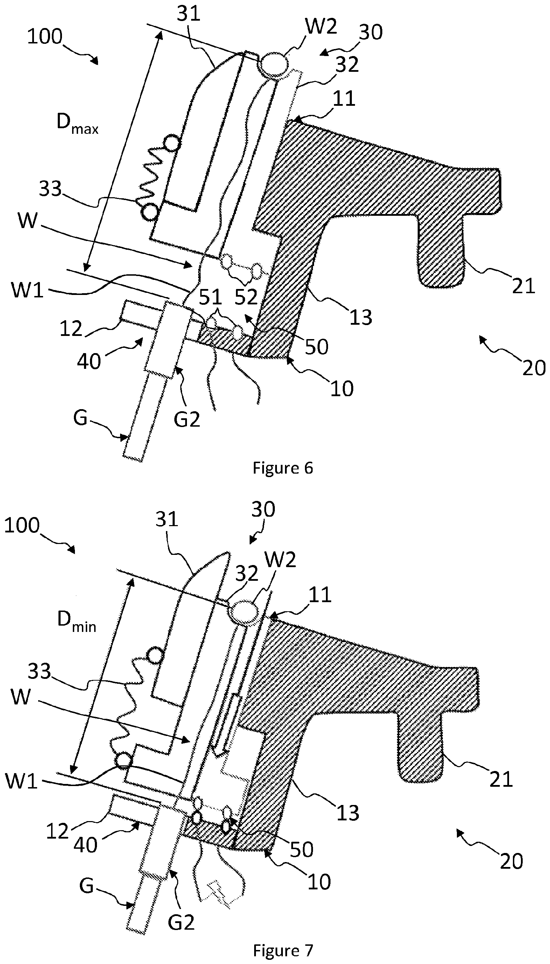

En référence aux figures 6 et 7, les moyens de montage 30 du câble W comprennent une partie fixe 31 et une partie mobile 32 monté en translation par rapport à la partie fixe 31. La partie fixe 31 est solidaire du corps principal 10. La partie mobile 32 est adaptée pour être déplacée selon un axe sensiblement vertical. Autrement dit, l'axe de déplacement de la partie mobile 32 s'étend sensiblement orthogonalement à la portion supérieure 11 et la portion inférieure 12 du corps 10.

La partie mobile 32 est adaptée pour bloquer la tête W2 du câble W. De préférence la partie mobile 32 comprend une rainure dans laquelle est insérée la tête W2 du câble W afin de bloquer le déplacement de la tête W2 par rapport à la partie mobile 32 selon l'axe du câble W.

La partie mobile 32 translate entre une position haute et une position basse. En position haute, comme illustrée à la figure 6, la distance Dₘₐₓ entre la tête W2 du câble W et l'arrêt de gaine G2 est maximale. En position basse, comme illustrée à la figure 7, la distance Dₘᵢₙ entre la tête W2 du câble W et l'arrêt de gaine G2 est minimale. La distance minimale Dₘᵢₙ est adaptée pour correspondre au jeu de fonctionnement désiré du câble W. En effet, lors du fonctionnement du câble W, la tête de câble W2 peut être déplacée par rapport à l'arrêt de gaine G2 de la distance minimale Dₘᵢₙ sans entraîner le coulissement du corps W1 du câble W dans la gaine G.

Les moyens de montage 30 comprennent en outre un ressort 33 adapté pour ramener la partie mobile 32 dans sa position haute après le réglage du jeu comme cela sera décrit par la suite. Le ressort 33 comprend une extrémité fixée à la partie mobile 32 et une extrémité fixée à la partie fixe 31. Lorsque la partie mobile 32 se déplace de la position haute à la position basse, le ressort 33 est étiré et exerce une force sur la partie mobile 32 adaptée pour déplacer la partie mobile 32 jusqu'à sa position haute.

Le dispositif de réglage 100 comprend en outre des moyens d'asservissement 50 du réglage du jeu du câble W. Les moyens d'asservissement 50 se présentent sous la forme de contacts électriques 51, 52: des contacts fixes 51 montés sur la portion inférieure 12 du corps 10 et des contacts mobiles 52 montés sur la partie mobile 32. Dans l'exemple illustré aux figures 6 et 7, les moyens d'asservissement 50 comprennent un premier et un deuxième contacts mobiles 52 et un premier et un deuxième contacts fixes 51. Les contacts mobiles 52 sont reliés électriquement entre eux. Les contacts fixes 51 sont adaptés pour être reliés électriquement à l'outil spécifique de réglage de la longueur de la gaine G. De tels contacts électriques forment un contacteur.

Lorsque la partie mobile 32 est dans une position autre que la position basse, le contacteur est à l'état ouvert : les contacts mobiles 52 et les contacts fixes 51 ne sont pas reliés entre eux. En position basse, le contacteur est en position fermée : le premier contact fixe 51 et le premier contact mobile 52, d'une part, et le deuxième contact fixe 51 et le deuxième contact mobile 52, d'autre part, sont reliés électriquement par contact. En position fermée, le premier et le deuxième contacts fixes 51 sont alors reliés électriquement. Autrement dit, un courant électrique peut alors circuler entre le premier et le deuxième contacts fixes 51 en passant par le premier et le deuxième contacts mobiles 52. L'outil spécifique est alors adapté pour détecter une telle information afin de s'arrêter.

Ainsi, lorsque l'outil règle la longueur de la gaine G, le dépassant de câble est réduit, ce qui entraîne la translation de la partie mobile 32 de sa position haute vers sa position basse.

Lorsque la partie mobile 32 atteint sa position basse, le contacteur est à l'état fermé. L'outil reçoit alors du dispositif de réglage une information relative à cet état et arrête automatiquement le réglage de la gaine G. Ceci permet ainsi de régler de manière précise le jeu de fonctionnement du câble. Cet asservissement est dit sécuritaire car il permet de sécuriser le fonctionnement du mécanisme de blocage.

## Revendications

1. Dispositif de réglage (100) d'un câble (W) d'actionnement d'un mécanisme de blocage de siège (S) pour véhicule, notamment automobile, ledit câble (W) étant entraîné par une manette de commande du-dit mécanisme et monté coulissant dans une gaine (G), ledit dispositif de réglage (100) comprenant des moyens de fixation (40) adaptés pour fixer ladite gaine (G) au dispositif de réglage (100) et des moyens de montage (30) adaptés pour fixer le câble (W) au dispositif de réglage (100), les moyens de montage (30) étant mobiles par rapport aux moyens de fixation(40) afin de régler un jeu fonctionnel du câble (W) définit par la distance (Dₘₐₓ, Dₘᵢₙ) entre les moyens de fixation (40) et les moyens de montage (30), le dispositif de réglage (100) comprenant en outre des moyens d'asservissement (50) du réglage du jeu fonctionnel du câble (W), **caractérisé en ce que**:
la manette bascule entre une position de repos dans laquelle le câble W n'est pas tendu et une position d'actionnement dans laquelle le câble W est tiré afin de commander le déblocage du mécanisme de blocage du siège S,
lors du basculement de la manette de la position de repos à la position de basculement, le câble W est tout d'abord tendu afin de rattraper le jeu de fonctionnement avant d'être tiré,
les moyens de montage (30) comprenant une partie fixe (31) solidaire du corps principal (10) et une partie mobile (32) montée coulissante par rapport à ladite partie fixe (31), ladite partie mobile (32) est adaptée pour fixer ledit câble (W) au dispositif de réglage (100).

2. Dispositif (100) selon la revendication précédente, comprenant un ressort (33) de rappel de la partie mobile (32) adapté pour déplacer la partie mobile (32) dans une position prédéterminée.

3. Dispositif (100) selon l'une des revendications précédentes, dans lequel les moyens d'asservissement (50) comprennent au moins un contact électrique fixe (51) et au moins un contact électrique mobile (52) formant un contacteur électrique, ledit contact fixe (51) et ledit contact mobile (52) étant adaptés pour être reliés électriquement entre eux lorsque la distance entre les moyens de fixations (40) et les moyens de montage (30) atteint une valeur prédéterminée (Dₘᵢₙ), définissant un état fermé dudit contacteur.

4. Dispositif (100) selon la revendication précédente, comprenant au moins deux contacts fixes (51) et deux contacts mobiles (52), lesdits contacts mobiles (52) étant reliés électriquement entre eux et chacun desdits contacts fixes (51) étant adaptés pour être reliés électriquement à un des contacts mobiles (52) à l'état fermé du contacteur de manière à ce que les contacts fixes (51) soient reliés électriquement entre eux.

5. Siège (S) comprenant un mécanisme de blocage dudit siège (S), une manette de commande dudit mécanisme, un câble (W) reliant ladite manette de commande et monté coulissant dans une gaine (G), et un dispositif (100) selon l'une des revendications précédentes, de réglage dudit câble (W).

6. Véhicule automobile comprenant au moins un siège (S) selon la revendication précédente.

7. Procédé de réglage, à l'aide d'un dispositif (100) selon l'une des revendications 3 à 4, d'un câble (W) monté coulissant dans une gaine (G), le procédé comprenant :
- une étape de réglage du jeu dudit câble (W),
- une étape de détection de la fermeture du contacteur électrique, et
- une étape d'arrêt automatique du réglage du jeu lorsque la fermeture du contacteur est détectée.

8. Procédé selon la revendication précédente, dans lequel l'étape de réglage comprend une sous-étape de réglage de la longueur de la gaine (G) à l'aide d'un outil.

9. Procédé selon la revendication précédente, dans laquelle l'étape d'arrêt automatique comprend une sous-étape d'arrêt dudit outil de réglage de la gaine (G).

## Patentansprüche

1. Einstellvorrichtung (100) für ein Betätigungskabel (W) eines Sitzblockiermechanismus (S) für ein Fahrzeug, insbesondere für ein Kraftfahrzeug, wobei das Kabel (W) durch einen Betätigungshebel des Mechanismus angetrieben und in einem Mantel (G) verschiebbar gelagert ist, wobei die Einstellvorrichtung (100) Befestigungsmittel (40) aufweist, die zur Befestigung des Mantels (Mantels an der Vorrichtung geeignet sind Einstellung (100) und Befestigungsmittel (30) zur Befestigung des Kabels (W) an der Einstelleinrichtung (100), wobei die Befestigungsmittel (30) relativ zu den Befestigungsmitteln (40) beweglich sind, um einen durch den Abstand (Dmax, Dmin) zwischen den Befestigungsmitteln (40) und den Befestigungsmitteln definierten Funktionssatz des Kabels (Kabels (W) einzustellen Anordnung (30), wobei die Einstellvorrichtung (100) ferner Mittel (50) zur Regelung der Einstellung des Funktionsspiels des Kabels (W) umfasst, **dadurch gekennzeichnet, dass**:
- der Handhebel kippt zwischen einer Ruhestellung, in der das Kabel W nicht gespannt ist, und einer Betätigungsstellung, in der das Kabel W gezogen wird, um die Entriegelung des Sitzblockiermechanismus S zu steuern.
- beim Kippen des Handgriffs von der Ruhestellung in die Kippstellung wird das Seil W zunächst gespannt, um das Betriebsspiel vor dem Ziehen einzuholen, wobei die Befestigungsmittel (30) einen festen Teil (31) umfassen, der fest mit dem Hauptkörper (10) verbunden ist, und einen beweglichen Teil (32) umfassen, der bezüglich des festen Teils (31) verschiebbar gelagert ist, 2) zur Befestigung des Kabels (W) an der Stelleinrichtung (100) ausgebildet ist.

2. Vorrichtung (100) nach dem vorhergehenden Anspruch, umfassend eine Feder (33) zum Vorspannen des beweglichen Teils (32), die angepasst ist, um den beweglichen Teil (32) in eine vorbestimmte Position zu bewegen.

3. Vorrichtung (100) nach einem der vorhergehenden Ansprüche, bei der die Regeleinrichtung (50) mindestens einen festen elektrischen Kontakt (51) und mindestens einen beweglichen elektrischen Kontakt (52) aufweist, der einen elektrischen Schalter bildet, wobei der feste Kontakt (51) und der bewegliche Kontakt (52) so ausgelegt sind, dass sie elektrisch miteinander verbunden werden, wenn der Abstand zwischen den Befestigungsmitteln (40) und die Befestigungsmittel (30) einen vorgegebenen Wert (Dmin) erreichen, der einen geschlossenen Zustand des Kontakters definiert.

4. Vorrichtung (100) nach dem vorhergehenden Anspruch, die mindestens zwei feste Kontakte (51) und zwei bewegliche Kontakte (52) aufweist, wobei die beweglichen Kontakte (52) elektrisch miteinander verbunden sind und jeder der festen Kontakte (51) so ausgelegt ist, dass er im geschlossenen Zustand des Kontakters elektrisch mit einem der beweglichen Kontakte (52) verbunden ist, sodass die festen Kontakte (51) elektrisch miteinander verbunden sind ...

5. Sitz (S) mit einem Verriegelungsmechanismus des Sitzes (S), einem Betätigungshebel des Mechanismus, einem Kabel (W), das den Betätigungshebel verbindet und verschiebbar in einem Mantel (G) angebracht ist, und einer Vorrichtung (100) nach einem der vorhergehenden Ansprüche zum Einstellen des Seils (W).

6. Kraftfahrzeug mit mindestens einem Sitz (S) nach dem vorhergehenden Anspruch.

7. Verfahren zum Einstellen eines in einem Mantel (G) verschiebbar gelagerten Kabels (W) mittels einer Vorrichtung (100) nach einem der Ansprüche 3 bis 4, wobei das Verfahren umfasst:
- einen Schritt zur Einstellung des Kabelspiels (W),
- einen Schritt zur Feststellung des Schließens des elektrischen Schalters und
- einen Schritt des automatischen Abschaltens der Spieleinstellung, wenn das Schließen des Schalters erkannt wird.

8. Verfahren nach dem vorhergehenden Anspruch, wobei der Einstellschritt einen Teilschritt des Einstellens der Länge der Hülle (G) mit einem Werkzeug umfasst.

9. Verfahren nach dem vorhergehenden Anspruch, wobei der Schritt des automatischen Stoppens einen Unterschritt des Stoppens des Hülleneinstellwerkzeugs (G) umfasst.

## Claims

1. Adjustment device (100) of a cable (W) for the actuation of a vehicle, including an automobile, seat locking mechanism (S), the said cable (W) being driven by a control lever of the said mechanism and sliding into a sheath (G), the said adjustment device (100) containing means of attachment (40) suitable for securing the said sheath (G) to the adjustment device (1) 00) and means of mounting (30) adapted to attach the cable (W) to the adjustment device (100), means of mounting (30) being mobile in relation to means of fastening(40) in order to adjust a functional set of the cable (W) defined by the distance (Dmax, Dmin) between means of fastening (40) and means of mounting (30), the adjustment device (100) which also includes means of servo (50) of the adjustment of the functional set of the cable (W), **characterized by**:
- the controller switches between a rest position in which the W cable is not tensioned and an actuation position in which the W cable is drawn in order to control the release of the S-seat blocking mechanism,
- when switching the controller from the rest position to the failover position, the W cable is first stretched to catch up with the operating set before being pulled, the means of mounting (30) comprising a fixed part (31) which is attached to the main body (10) and a mobile part (32) which is sliding in relation to the said fixed part (31), the said mobile part (31) 2) is adapted to attach the said cable (W) to the adjustment device (100.

2. Device (100) according to the previous claim, including a spring (33) of recall of the mobile part (32) adapted to move the mobile part (32) in a predetermined position.

3. Device (100) according to one of the preceding claims, in which the means of servo (50) include at least one fixed electrical contact (51) and at least one mobile electrical contact (52) forming an electric contact, the said fixed contact (51) and the said mobile contact (52) being adapted to be connected electrically to each other when the distance between the means of fastening (40) and the means of mounting (30) reaches a predetermined value (Dmin), defining a closed state of the said switch.

4. Device (100) according to the previous claim, comprising at least two fixed contacts (51) and two mobile contacts (52), those mobile contacts (52) being electrically connected to each of the said fixed contacts (51) being adapted to be electrically connected to one of the mobile contacts (52) in the closed state of the switch so that the fixed contacts (51) are electrically connected between them.

5. Seat (S) consisting of a blocking mechanism of the said seat (S), a control lever of the said seat, a cable (W) connecting the said control lever and sliding in a sheath (G), and a device (100) according to one of the previous claims, for adjusting the said cable (W).

6. Motor vehicle with at least one seat (S) as per the previous claim.

7. Procedure for adjusting, using a device (100) according to one of the claims 3 to 4, a cable (W) mounted sliding into a sheath (G), the process comprising:
- a set step of the cable (W),
- a step to detect the closure of the electrical switch, and
- an automatic stop step for setting the game when the switch is closed.

8. Process according to the previous claim, in which the adjustment step includes a sub-step of adjusting the length of the sheath (G) using a tool.

9. Process according to the previous claim, in which the automatic shutdown step includes a stop sub-step of the said sheath adjustment tool (G).
